Europäisches Patentamt

European Patent Office

Office européen des brevets

(19)

(11) Veröffentlichungsnummer : **0 548 120 B1**

# (12) EUROPÄISCHE PATENTSCHRIFT

(45) Veröffentlichungstag der Patentschrift :
22.06.94 Patentblatt 94/25

(51) Int. Cl.⁵ : **G11B 7/095**

(21) Anmeldenummer : **91915539.0**

(22) Anmeldetag : **06.09.91**

(86) Internationale Anmeldenummer :
**PCT/EP91/01699**

(87) Internationale Veröffentlichungsnummer :
**WO 92/04712 19.03.92 Gazette 92/07**

(54) **VERFAHREN ZUM MESSEN ODER REGELN DES RADIAL- UND TANGENTIALWINKELS EINES LICHTSTRAHLS.**

(30) Priorität : **10.09.90 DE 4028703**

(43) Veröffentlichungstag der Anmeldung :
**30.06.93 Patentblatt 93/26**

(45) Bekanntmachung des Hinweises auf die
Patenterteilung :
**22.06.94 Patentblatt 94/25**

(84) Benannte Vertragsstaaten :
**AT BE CH DE DK ES FR GB GR IT LI NL SE**

(56) Entgegenhaltungen :
**EP-A- 0 070 070**
**EP-A- 0 116 467**
**EP-A- 0 148 028**
**EP-A- 0 313 818**
**US-A- 4 634 853**

(73) Patentinhaber : **DEUTSCHE THOMSON-BRANDT GMBH**
**Hermann-Schwer-Strasse 3**
**D-78048 Villingen-Schwenningen (DE)**

(72) Erfinder : **FÜLDNER, Friedrich**
**Wilstorfstr. 19**
**D-7730 Villingen-Schwenningen (DE)**
Erfinder : **KÜHN, Hans-Robert**
**Haydnweg 9**
**D-7742 St. Georgen (DE)**
Erfinder : **STORZ, Dieter**
**Wiesenwegle 7**
**D-7233 Lauterbach (DE)**

## Beschreibung

Die Erfindung betrifft ein Verfahren zur Erzeugung je eines Regel- oder Meßsignals, um den Tangentialwinkel und den Radialwinkel eines zum Lesen von Daten auf einen rotierenden Aufzeichnungsträger gerichteten Lichtstrahls zu messen oder auf einen Sollwer zu regeln, wobei der Lichtstrahl vom Aufzeichnungsträger auf einen Photodetektor reflektiert wird, dessen Ausgangssignal das Datensignal darstellt.

Zum Lesen der Daten einer optischen Platte, z.B. einer sogenannten Compact-Disc in einem CD-Spieler oder einer magneto-optischen Platte, wird ein Lichtstrahl mittels eines Fokusregelkreises auf die Platte fokussiert, die ihn auf eine oder mehrere Photodioden reflektiert, aus deren Ausgangssignalen das elektrische Datensignal gewonnen wird. Mittels eines Spurregelkreises wird der die Daten abtastende Lichtstrahl entlang den kreis- oder spiralförmigen Datenspuren der Platte geführt.

Ein bekannter optischer Aufzeichnungsträger ist z.B. die CD-Platte, bei der auf die lichtdurchlässige Schicht eine licht-reflektierende Aluminiumschicht folgt. Die lichtreflektierende Aluminiumschicht weist Vertiefungen oder Erhöhungen, sogenannte Pits, auf, welche die auf der CD-Platte gespeicherten Daten darstellen. Mittels einer optischen Abtastvorrichtung sind die Daten von der CD-Platte lesbar, weil das Reflexionsverhalten der lichtreflektierenden Aluminiumschicht von dem Muster abhängt, das die Vertiefungen auf der Platte bilden. Von einer Vertiefung, häufig auch groove genannt, oder von einer Erhöhung wird weniger Licht reflektiert als von dem Bereich ohne Vertiefung oder Erhöhung, die oft auch als land bezeichnet wird.

An der Intensität des von der CD-Platte reflektierten Lichts erkennt daher die optische Abtastvorrichtung, ob es sich bei dem abgetasteten Bit z.B. um eine logische Eins oder eine logische Null oder um einen Amplitudensprung handelt, der auftritt, wenn der Lichtstrahl den Übergang von einer Vertiefung zu einer Erhöhung oder von einer Erhöhung zu einer Vertiefung abtastet.

Um die Daten auf der Platte abtasten zu können, sollte der Lichtstrahl möglichst lotrecht auf die Plattenoberfläche treffen, denn Abweichungen von ± 1° führen bereits zu einem steilen Anstieg der Bitfehlerrate. Derjenige Winkel, den der Lichtstrahl in der Tangentialebene mit der Lotrechten einschließt, wird im weiteren Verlauf als Tangentialwinkel bezeichnet, während für den Winkel, den der Lichtstrahl in der zur Tangentialebene senkrechten Radialebene zur Lotrechten einschließt, der Ausdruck Radialwinkel gewählt wird.

Aus der EP-PA 0 070 070 ist eine optische Abtastvorrichtung für ein optisches Aufzeichnungs- und/oder Wiedergabegerät bekannt, dessen Objektivlinse, die den Lichtstrahl auf die Platte fokussiert, in einem zylinderförmigen Objektivhalter sitzt. Der zylinderförmige Objektivhalter schwebt frei in einem Magnetfeld, das von mehreren Spulen erzeugt wird. Auf dem Mantel des Objektivhalters ist ein Dachkantprisma angeordnet, auf dessen Dachkante der Lichtstrahl einer Lichtquelle mit Hilfe einer Linse gerichtet ist. Vom Dachkantprisma wird deshalb der von der Lichtquelle ausgesendete Lichtstrahl in zwei Lichtstrahlen aufgeteilt. Der eine vom Dachkantprisma reflektierte Lichtstrahl ist auf einen ersten Vierquadrantenphotodetektor aus vier Photodioden gerichtet; im Strahlengang des anderen vom Dachkantprisma reflektierten Lichtstrahls liegt ein zweiter Vierquadrantenphotodetektor mit ebenfalls vier Photodioden. Aus den insgesamt acht Ausgangssignalen der Photodioden der beiden Vierquadrantenphotodetektoren werden die Regelsignale erzeugt, um die Lage des Objektivhalters im Raum in Bezug zu einem festen Koordinatensystem zu regeln.

Der Objektivhalter hat sechs Freiheitsgrade der Bewegung. Er kann entlang der optischen Achse der Objektivlinse, die als z-Achse bezeichnet wird, entlang der y-Achse, die parallel zur Tangente der Platte verläuft, und entlang der x-Achse, die wie ein Radius zum Mittelpunkt der Platte führt, bewegt werden. Die Achsen x, y und z bilden ein rechtwinkliges Koordinatensystem. Zusätzlich zu diesen drei translatorischen Bewegungen ist der Objektivhalter um die x-, y- und die z-Achse drehbar.

Diese bekannte optische Abtastvorrichtung, deren frei in einem Magnetfeld schwebende Objektivlinse in allen sechs Freiheitsgraden bewegbar ist, weist aber schwerwiegende Nachteile auf.

Ein erster Nachteil liegt in dem hohen Aufwand begründet, denn zur Lageregelung der Objektivlinse sind eine zusätzliche Lichtquelle, zwei zusätzliche Vierquadrantenphotodetektoren, eine Linse und ein Dachkantprisma erforderlich.

Ein zweiter Nachteil zeigt sich darin, daß die zusätzliche Lichtquelle, die beiden zusätzlichen Vierquadrantenphotodetektoren, die Objektivlinse im Objektivhalter, das Dachkantprisma auf der Manteloberfläche des Objektivhalters und die Achse des Plattentellers, auf dem die abzuspielende Platte ruht, sehr genau zueinander justiert sein müssen, wenn der Lichtstrahl lotrecht auf die Platte strahlen soll.

Ein dritter Nachteil besteht darin, daß die Masse des Objektivhalters, der frei beweglich in einem Magnetfeld schwebt, um die Masse des Dachkantprismas vergrößert wird, und daß durch das Dachkantprisma eine unsymmetrische Massenverteilung des Objektivhalters verursacht wird. Als frei bewegliches in einem Magnetfeld schwebendes Teil sollte sich der Objektivhalter aber durch möglichst geringe Masse und eine symmetrische Masseverteilung auszeichnen.

Doch der wohl schwerstwiegende Nachteil liegt darin, daß der tatsächliche Winkel, unter dem der Lichtstrahl auf die Platte trifft, überhaupt nicht erfasst wird. Vielmehr wird nur die Lage der optischen Achse der Objektivlinse bezüglich einer fest im Raum stehenden Bezugsachse geregelt. Bei der bekannten Vorrichtung dient die Drehachse des Plattentellers als fest im Raum stehende Bezugsachse.

Wenn nun z.B. die Platte mit einem Plattenschlag behaftet ist, steht zwar die optische Achse der Objektivlinse im Raum fest, jedoch ändert die Plattenebene ihre Lage in Raum. Deshalb werden durch einen Plattenschlag der Tangential- und der Radialwinkel des Lichtstrahls verändert; weil diese vom Plattenschlag verursachten Änderungen des Tangential- und des Radialwinkels nicht erfasst werden, können sie auch nicht ausgeregelt werden.

Wenn die Platte nicht eben ist, sondern eine gewölbte oder wellige Oberfläche hat, dann ändern sich der Tangential- und der Radialwinkel ständig, während sich die Platte dreht. Auch diese störenden Winkeländerungen können nicht erfasst und damit auch nicht ausgeregelt werden.

Ebensowenig lassen sich der Tangential- und der Radialwinkel ausregeln, wenn die Achse des Plattenantriebs nicht fest im Raum steht, sondern eine Präzessionsbewegung ausführt.

Aus der EP-A-0 313 818 ist eine optische Leseeinrichtung bekannt, bei der durch Auswertung eines Signals, das aus dem Spurfolgefehlersignal des abtastenden Lichtstrahls und dem Ausgangssignal eines Oszillators gebildet wird, die Position des abtastenden Lichtstrahls bestimmt wird. Diese Druckschrift gibt also keine Anregung, einfach Amplitude und Phasenlage des abgetasteten Datensignals auszuwerten, um den Einfallswinkel des abtastenden Lichtstrahls zu bestimmen, wie dies gemäß der vorliegenden Erfindung geschieht.

Es ist Aufgabe der Erfindung, ein Verfahren anzugeben, das tatsächlich das Messen des Tangential- und des Radialwinkels des auf die Platte fokussierten Lichtstrahls ermöglicht, ohne eine zuzätzliche optische Meßvorrichtung vorsehen zu müssen, ohne die Masse des Halters für die Objektivlinse zu erhöhen und eine unsymmetrische Masseverteilung zu verursachen.

Die Erfindung löst diese Aufgabe dadurch, daß das Datensignal in einem Amplitudendemodulator demoduliert wird und daß aus der Amplitude und der Phasenlage des demodulierten Datensignals die Regel- oder die Meßsignale erzeugt werden.

Es zeigen

| | |
|---|---|
| Figur 1 | einen plattenförmigen Aufzeichnungsträger; |
| Figur 2 | die optische Abtastung des plattenförmigen Aufzeichnungsträgers bei unterschiedlichen Radial- und Tangentialwinkeln; |
| Figur 3 | das Datensignal HF bei lotrechtem Einfall des Lichtstrahls auf den Aufzeichnungsträger; |
| Figur 4 | das Datensignal HF und das gefilterte Fokusfehlersignal F in Abhängigkeit vom Radialwinkel; |
| Figur 5 | das Datensignal HF und das gefilterte Fokusfehlersignal F in Abhängigkeit von Tangentialwinkel; |
| Figur 6 | eine Anordnung zur Durchführung des erfindungsgemäßen Verfahrens gemäß Anspruch 5; |
| Figur 7 | das Datensignal HF, das Fokusfehlersignal FE, das gefilterte Fokusfehlersignal F, das demodulierte Datensignal M, das digitalisierte Fokusfehlersignal FD, das digitalisierte demodulierte Datensignal MD und eine Steuerspannung Ux; |
| Figur 8 | eine Anordnung zur Durchführung des erfindungsgemäßen Verfahrens gemäß Anspruch 5 mit einer Vorrichtung zur Fehlerkorrektur; |
| Figur 9 | die Steuerspannung Ux in Abhängigkeit von unterschiedlichen Radialwinkeln und Tangentialwinkeln; |
| Figur 10 | ein Flußdiagramm zur Bestimmung des Betrages und Vorzeichens des Radial- und des Tangentialwinkels; |
| Figur 11 | das demodulierte Datensignal M, das demodulierte digitalisierte Datensignal MD in Abhängigkeit von unterschiedlichen Radial- und Tangentialwinkeln sowie das Fokusfehlersignal FE und das digitalisierte Fokusfehlersignal FD; |
| Figur 12 | ein Ausführungsbeispiel eines Amplitudendemodulators; |
| Figur 13 | ein Ausführungsbeispiel eines Impulsformers; |
| Figur 14 | eine Anordnung zum Messen des Radial- und des Tangentialwinkels eines plattenförmigen Aufzeichnungsträgers; |
| Figur 15 | den Aufbau einer optischen Abtastvorrichtung zum Lesen der Daten des plattenförmigen Aufzeichnungsträgers; |
| Figur 16 | die Amplitude des amplitudenmodulierten Datensignals HF in Abhängigkeit vom Radialwinkel $\phi R$ und vom Tangentialwinkel $\phi T$; |
| Figur 17 | das digitale FokusfehlersignaL FD und das demodulierte Datensignal MD; |
| Figur 18 | ein Flußdiagramm zur Berechnung des Radialwinkels $\phi R$ und des Tangentialwinkels $\phi T$. |

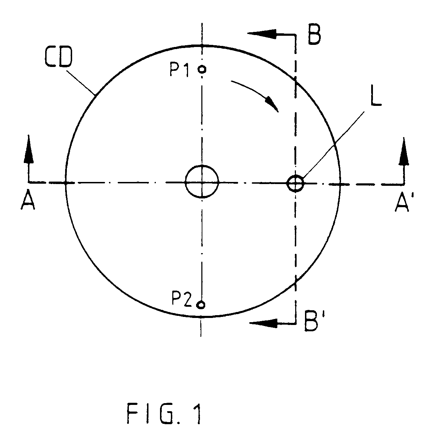

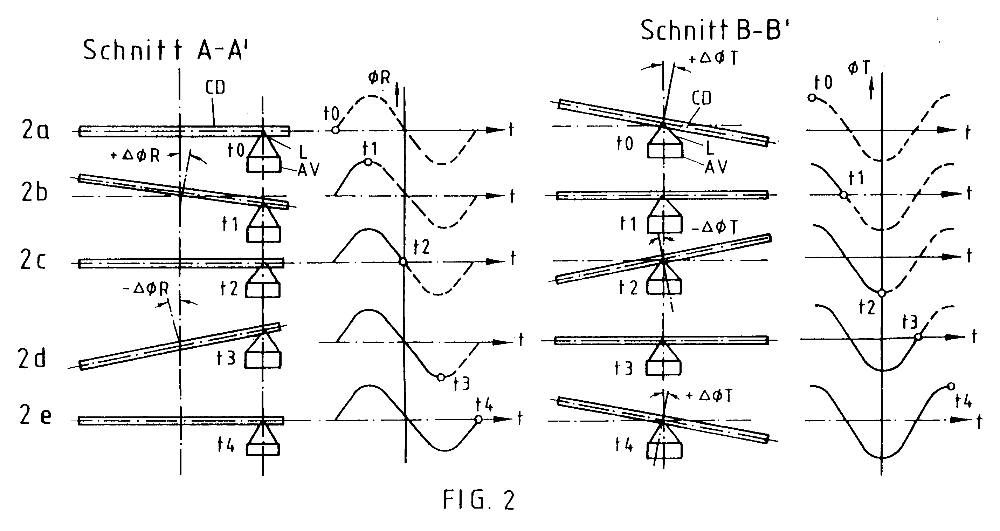

Um die Erfindung leichter verstehen zu können wird zunächst anhand der Figuren 1 und 2a bis 2e erklärt, wie sich der Plattenschlag auf den Radial- und den Tangentialwinkel auswirkt. In der Figur 1 ist eine Platte CD, z.B. die Compact-Disc eines CD-Spielers, gezeigt. Infolge des Plattenschlags, dessen Ursachen in der Form der Platte, im Plattenantrieb oder, wie es meist der Fall ist, in beidem liegen, liegt beispielsweise der Punkt P1 der Platte CD, die sich in Pfeilrichtung dreht, tiefer als der Punkt P2.

In den Figuren 2a bis 2e sind die Schnitte A, A' und B, B' durch die Platte CD dargestellt.

Mittels einer optischen Abtastvorrichtung AV, deren Objektivlinse 0 einen Lichtstrahl L auf die Platte CD fokussiert, werden die auf der Platte aufgezeichneten Daten gelesen.

In der Figur 2a liegt der Punkt P1, wie in Figur 1 gezeigt ist oben, während der Punkt P2 unten liegt. Der Radialwinkel $\phi$R ist daher null, der Tangentialwinkel hat daher den Wert + $\Delta$ $\phi$T.

In Figur 2b hat sich die Platte im 90° in Pfeilrichtung gedreht. Der Punkt P1 wird vom Lichtstrahl L gerade abgetastet. Der Radialwinkel $\phi$R hat jetzt den Wert, + $\Delta$ $\phi$R, während der Tangentialwinkel $\phi$T null ist. Nach einer Drehung um weitere 90°, der Punkt P1 liegt jetzt unten, während der Punkt P2 oben liegt, ist der Radialwinkel wieder null; wie in Figur 2c gezeigt ist, hat der Tangentialwinkel den negativen Wert - $\Delta$ $\phi$T.

Nach einer Drehung um weitere 90°, dargestellt in Figur 2d, strahlt der Lichtstrahl L auf den Punkt P2. Der Radialwinkel hat den negativen Wert -$\Delta$ $\phi$R, dagegen ist der Tangentialwinkel $\phi$T null.

Schließlich ist in Figur 2e die Ausgangslage nach einer Drehung um weitere 90° wieder erreicht. Der Radialwinkel ist null, der Tangentialwinkel nimmt den positiven Wert + $\Delta$ $\phi$T an.

Die Erfindung geht nun von der ersten Erkenntnis aus, daß sich der Radialwinkel $\phi$R nach einer Sinusfunktion, der Tangentialwinkel $\phi$T um 90° phasenverschoben nach einer Kosinusfunktion oder umgekehrt je nach Wahl des Nullpunktes ändert, wenn sich die Platte CD dreht.

Wie bei optischen Aufzeichnungs- und Wiedergabegeräten üblich, wird der auf die Platte fokussierte Lichtstrahl von der Platte auf einen oder mehrere Photodetektoren reflektiert. Es sind beispielsweise optische Abtastvorrichtungen bekannt, die im Strahlengang ein optisches Gitter haben, das den von einem Laser ausgesendeten Lichtstrahl in den Hauptstrahl und die Beugungsstrahlen aufteilt. Mittels einer Objektivlinse werden der Hauptstrahl und die Beugungsstrahlen auf die Platte fokussiert. Der Hauptstrahl wird von der Platte ein astigmatisch wirkendes optisches Element, z.B. eine Zylinderlinse, durchstrahlend auf einen Vierquadrantenphotodetektor aus vier Photodetektoren reflektiert. Aus dem Summensignal der vier Photodioden wird das Datensignal HF erzeugt. Die Ausgangssignale zweier sich diagonal gegenüberliegender Photodioden werden addiert. Die auf diese Weise gebildeten zwei Summen werden voneinander subtrahiert, um das Fokusfehlersignal FE, das Regelsignal für den Fokusregelkreis, zu erzeugen.

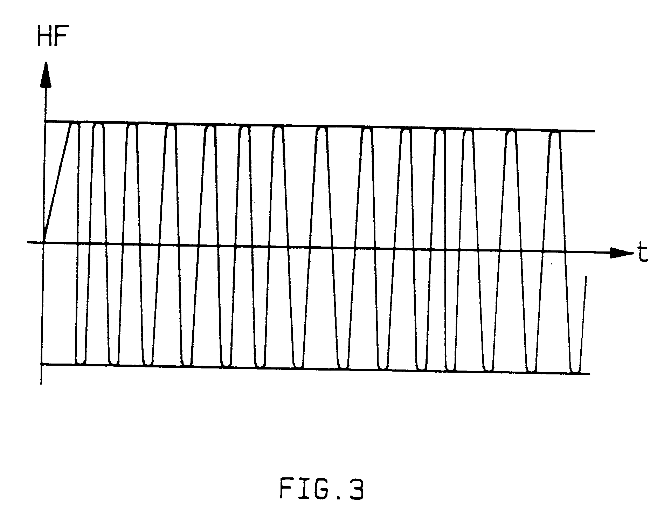

In der Figur 3 ist das Datensignal HF gezeigt, wenn der Lichtstrahl L lotrecht auf die Platte CD trifft. Die obere und untere Hüllkurve des Datensignals HF sind Geraden.

Die Erfindung geht nun von der weiteren Erkenntnis aus, daß von der Platte infolge unterschiedlicher Brechung oder Reflexion weniger Licht auf den Vierquadrantenphotodetektor reflektiert wird, wenn der Lichtstrahl nicht mehr lotrecht auf die Platte strahlt. Als Folge davon wird die Amplitude des Datensignals HF gedämpft.

Wenn die Platte nun mit einem Plattenschlag behaftet ist, so wird das Datensignal HF wegen der sinusförmigen Änderung des Radialwinkels $\phi$R mit einer Sinusfunktion moduliert; weil der Tangentialwinkel $\phi$T sich nach einer Kosinusfunktion ändert, wird das Datensignal HF gleichzeitig noch mit einer Kosinusfunktion moduliert.

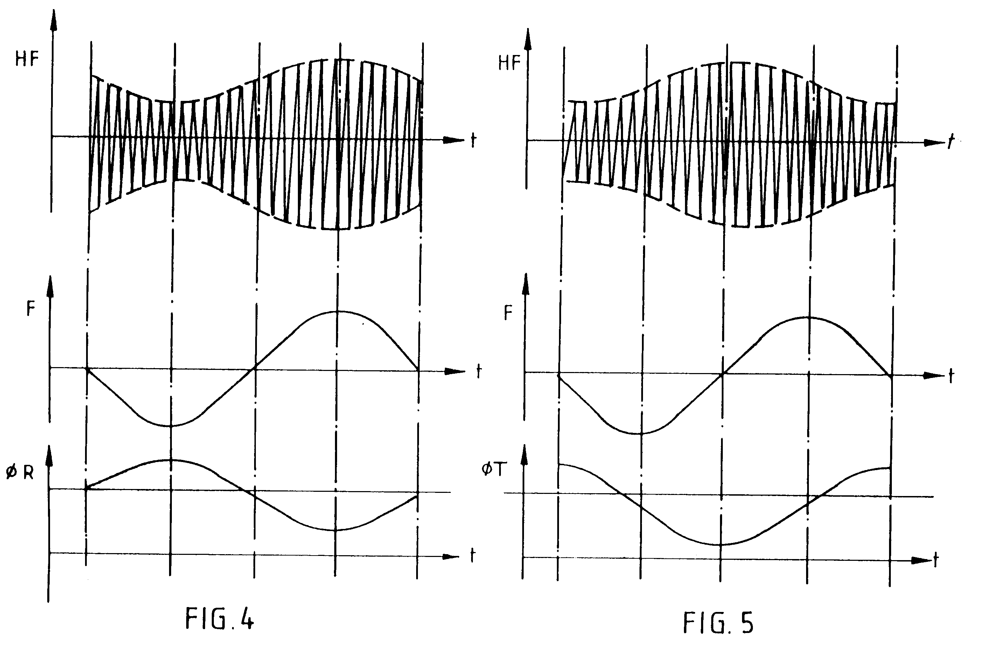

In Figur 4 sind das in Abhängigkeit vom Radialwinkel $\phi$R amplitudenmodulierte Datensignal HF, der Radialwinkel $\phi$R sowie das sinusförmige Fokusfehlersignal FE gezeigt. Die obere und die untere Hüllkurve des Datensignals HF sind sinusförmig.

In Figur 5 sind das in Abhängigkeit von Tangentialwinkel $\phi$T modulierte Datensignal HF, der Tangentialwinkel $\phi$T und das gefilterte Fokusfehlersignal F gezeigt. Die obere und die untere Hüllkurve des Datensignals HF sind kosinurförmig.

Weil der Fokusregelkreis infolge des Plattenschlags ständig die Lage der Objektivlinse nachregeln muß, ist das gefilterte Fokusfehlersignal F ebenfalls sinusförmig. Es steht in einer festen Phasenbeziehung zum Plattenschlag. Wegen der festen Phasenbeziehung zum Plattenschlag ist das gefilterte Fokusfehlersignal F als Referenzsignal geeignet, um die Phasenverschiebung des amplitudenmodulierten Datensignals HF zu messen. Weil sich infolge des Plattenschlags sowohl der Radialwinkel $\phi$R als auch der Tangentialwinkel $\phi$T ändern, überlagern sich die beiden Modulationsanteile U1 = A * cos $\alpha$ und U2 = - B * sin $\alpha$, die vom Radialwinkel $\phi$R und vom Tangentialwinkel $\phi$T verursacht werden. Die resultierende Modulationsspannung $U_y$ ergibt sich zu $U_y$ = A * cos$\alpha$ - B * sin$\alpha$ = C * sin ($\alpha$ + $\varphi$). Aus der zweiten Ableitung $d^2 U_y/d\alpha^2$ = 0 kann der Wendepunkt, der mit dem Nulldurchgang übereinstimmt, berechnet werden.

$$d^2 U_y/d\alpha^2 = - A * \cos \alpha + B * \sin \alpha = 0.$$

$$tg\alpha = tg \varphi = A/B.$$

Daraus ergeben sich:

$$A = C * \sin \varphi$$
$$B = C * \cos \varphi$$

Die Werte von C und φ werden durch Messungen ermittelt. A ist derjenige Modulationsanteil, der durch Änderungen des Radialwinkels φR verursacht wird; B ist der Modulationsanteil, den Änderungen des Tangentialwinkels φT bewirken.

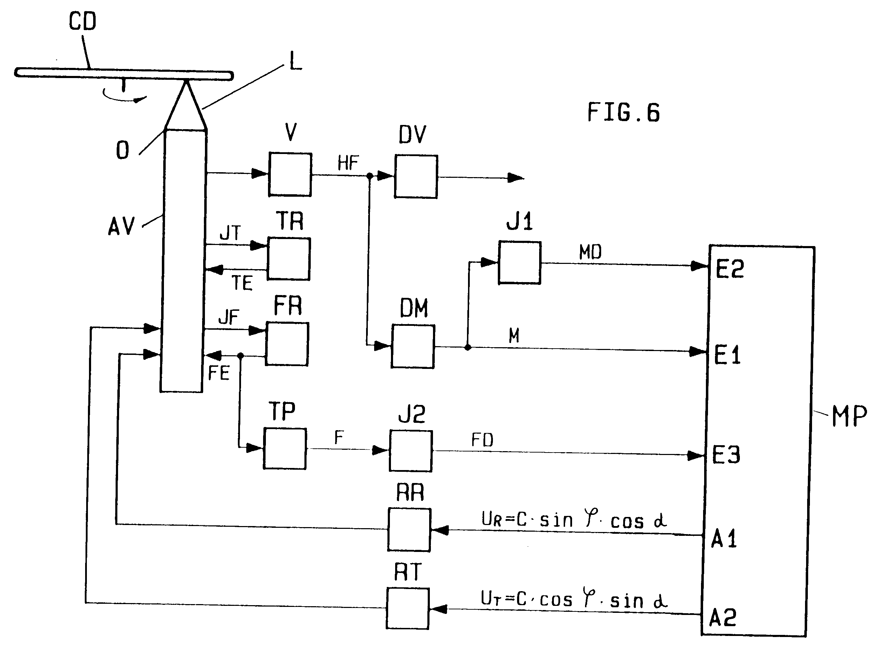

Es wird nun die in Figur 6 abgebildete Anordnung zur Durchführung des erfindungsgemäßen Verfahrens beschrieben und erläutert.

Eine optische Abtastvorrichtung AV, deren Objektivlinse O einen Lichtstrahl L mittels eines Fokusregelkreises auf eine rotierende Platte CD fokussiert, gibt das Datensignal an einen Verstärker V. Außerdem erzeugt die optische Abtastvorrichtung den Istwert IT für einen Spurregler TR und den Istwert IF für den Fokusregler FR. Der Spurregler TR liefert ein Spurfehlersignal TE an die optische Abtastvorrichtung AV, um den lichtstrahl L entlang den Datenspuren der Platte CD zu führen. Der Fokusregler FR erzeugt ein Fokusfehlersignal FE für die optische Abtastvorrichtung AV, um den Lichtstrahl L mittels der Objektivlinse O auf die Platte zu fokussieren.

In der optischen Abtastvorrichtung AV sind Stellglieder, beispielsweise Spulen, vorgesehen, die der Einfachheit halber jedoch nicht in Figur 6 gezeichnet sind, um die räumliche Lage der Objektivlinse O festzulegen und somit den Radialwinkel φR und den Tangentialwinkel φT einstellen zu können.

Der Verstärker V leitet das Datensignal HF weiter an eine Einheit zur Datenverarbeitung DV und an einen Amplitudendemodulator DM, dessen Ausgang mit dem ersten Eingang E1 eines Mikroprozessors MP und dem Eingang eines ersten Impulsformers I1 verbunden ist. Der Ausgang des Impulsformers I1 ist mit dem zweiten Eingang E2 des Mikroprozessors MP verbunden. Das vom Fokusregler FR erzeugte Fokusfehlersignal FE wird dem Eingang eines Tiefpasses TP zugeführt, dessen Ausgang mit dem Eingang eines zweiten Impulsformers I2 verbunden ist. Der Ausgang des zweiten Impulsformers I2 ist mit dem dritten Eingang E3 des Mikroprozessors MP verbunden. Der erste Ausgang A1 des Mikroprozessors MP ist mit einem Regler RR zur Regelung des Radialwinkels φR und der zweite Ausgang A2 mit einem Regler RT zur Regelung des Tangentialwinkels φT verbunden. Die Regelsignale der beiden Regler RR und RT werden Stellgliedern in der optischen Abtastvorrichtung AV zugeführt, die die räumliche Lage der Objektivlinse O einstellen. Mit Hilfe der Regelsignale kann aber auch die räumliche Lage der gesamten optischen Abtastvorrichtung oder der Achse des Plattenantriebs eingestellt werden.

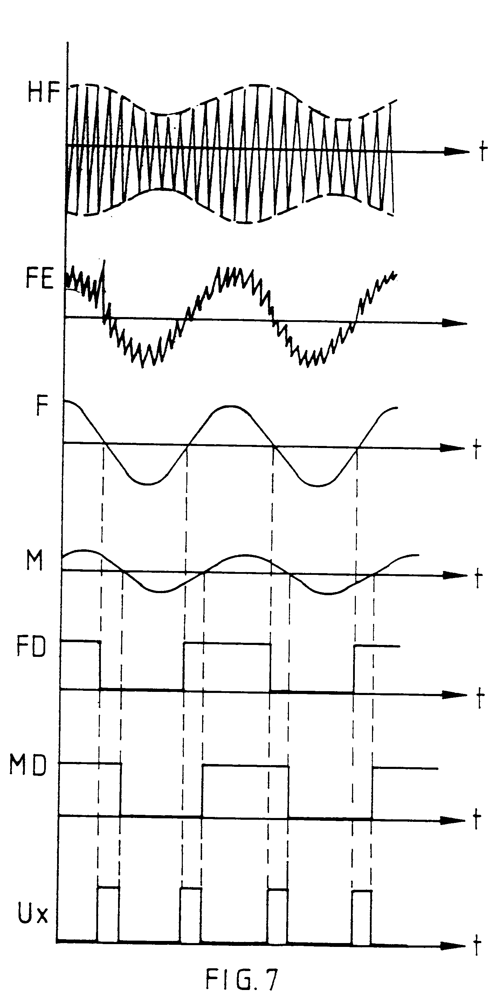

In der Figur 7 sind das amplitudenmodulierte Datensignal HF am Ausgang des Vorverstärkers V, das Fokusfehlersignal FE, das gefilterte Fokusfehlersignal F am Ausgang des Tiefpasses TP, das digitalisierte Fokus-Fokusfehlersignal FD an Ausgang des zweiten Impulsformers I2, das demodulierte Datensignal M am Ausgang des Amplitudendemodulators DM und das digitalisierte demodulierte Datensignal MD am Ausgang des ersten impulsformers I1 gezeigt.

Dem sinusförmigen Fokusfehlersignal FE sind die HF-Schwingungen des Datensignals HF überlagert, die der Tiefpaß TP wegfiltert. Der Impulsformer I2 wandelt das gefilterte sinusförmige Fokusfehlersignal F in ein rechteckförmiges Signal, das digitalisierte Fokusfehlersignal FD. Der Impulsformer I1 wandelt das demodulierte sinusförmige Datensignal M in das rechteckförmige demodulierte Datensignal MD. Der Mikroprozessor berechnet aus dem demodulierten Datensignal $M = C * \sin(\alpha + \varphi)$ auf die bereits erläuterte Weise die Regelsignale $UR = C * \sin\varphi * \cos\alpha$ und $UT = -C * \cos\varphi * \sin\alpha$ für die Regler RR und RT.

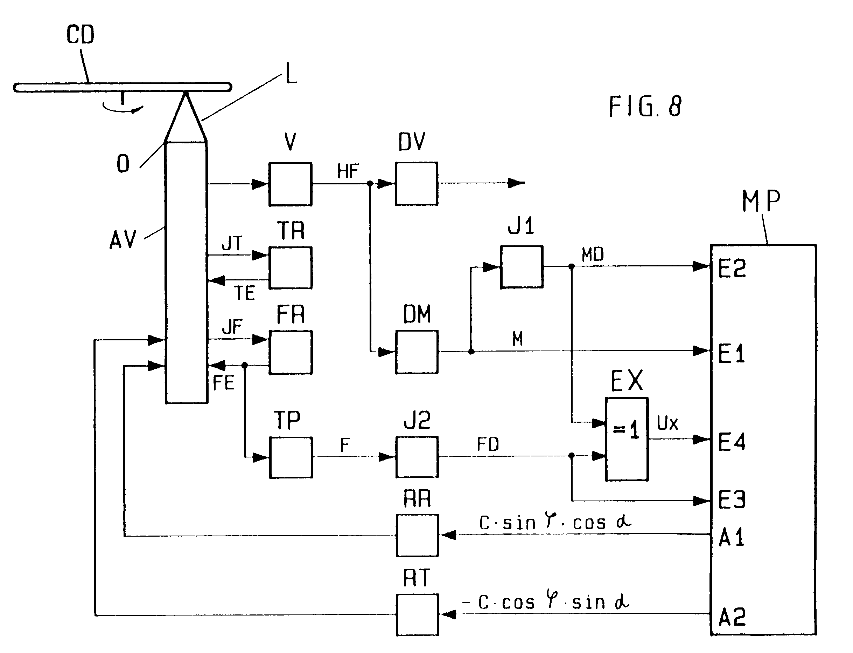

In der Figur 8 werden das digitalisierte Fokusfehlersignal FD und das demodulierte digitalisierte Datensignal MD in einem EXKLUSIV-ODER-Gatter EX miteinander verknüpft, um eine Steuerspannung Ux zu erzeugen. Das EXKLUSIV-ODER-Gatter EX kann auch im Mikroprozessor MP integriert sein.

In Figur 7 ist Ux neben den Signalen FD und MD ebenfalls gezeigt.

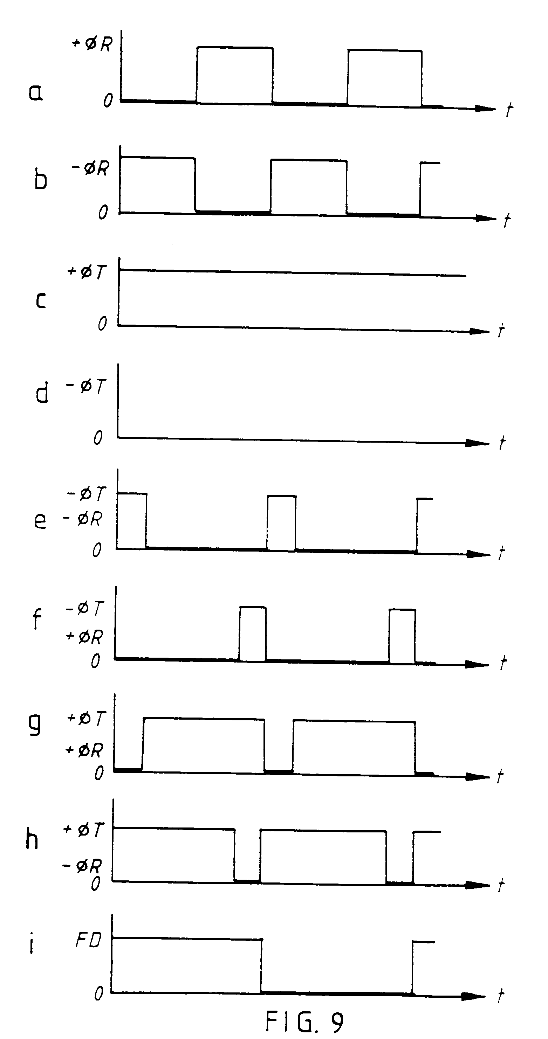

In den Figuren 9a bis 9h ist die Steuerspannung Ux für unterschiedliche Radialwinkel φR und Tangentialwinkel φT dargestellt. Figur 9i zeigt das digitalisierte Fokusfehlersignal FD.

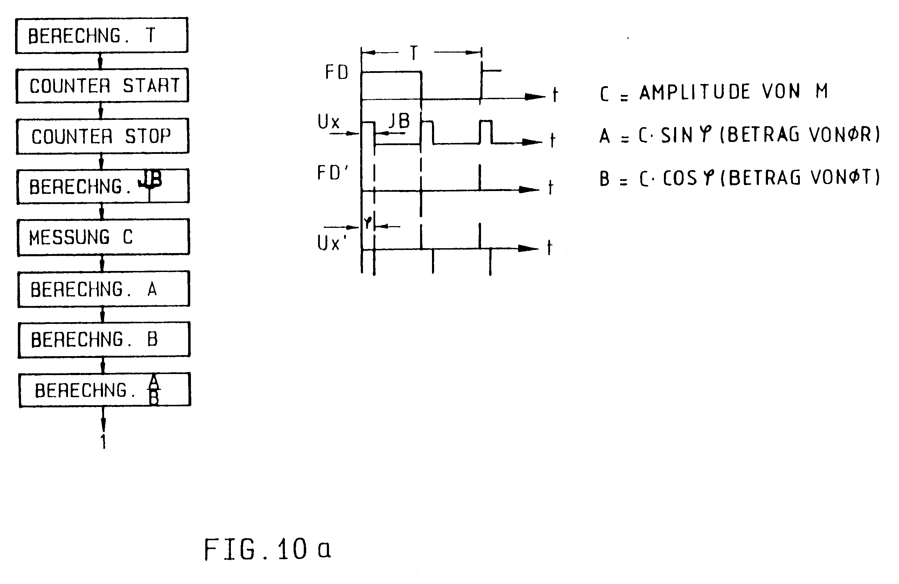

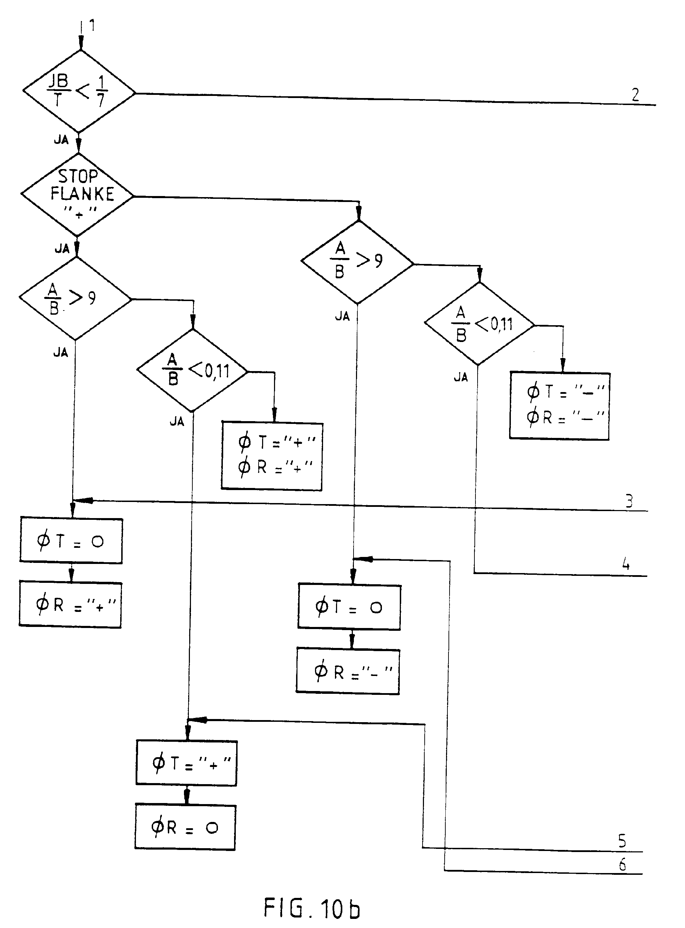

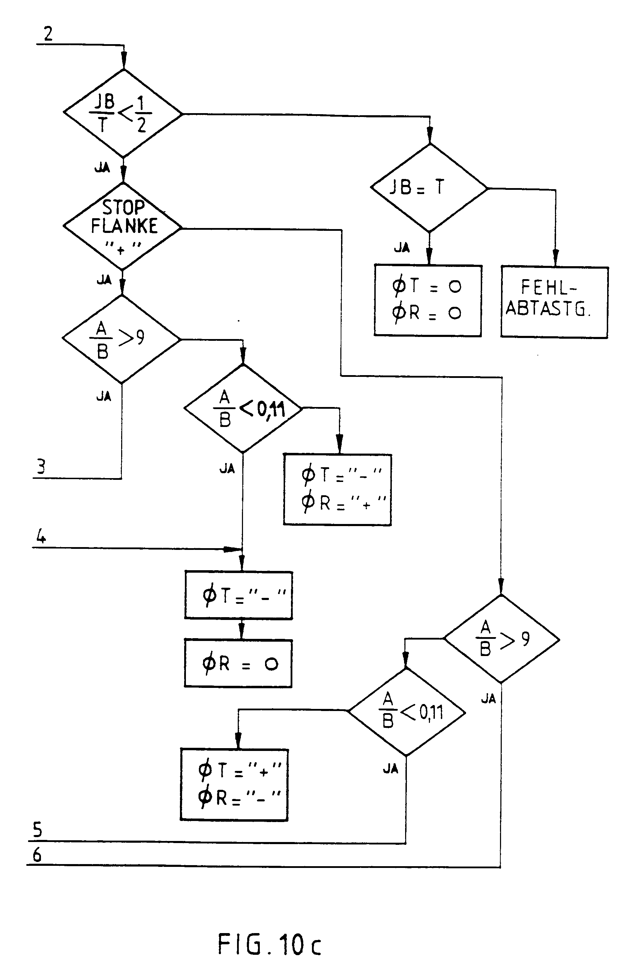

Mit Hilfe des in Figur 10 abgebildeten Flußdiagramms wird nun erläutert, wie beispielsweise der Radialwinkel φR und der Tangentialwinkel φT nach Betrag und Vorzeichen berechnet werden können.

Zunächst werden die Periode T des digitalisierten Fokusfehlersignals FD und die Impulsbreite IB des Steuersignals Ux am Ausgang des EXKLUSIV-ODER-Gatters EX mittels zweier Zähler gemessen, um den Wert IB/T zu berechnen. Beide ZähLer werden von der steigenden Flanke im digitalisierten Fokusfehlersignal FD gestartet. Außerdem wird die Amplitude C des demodulierten Datensignals M gemessen, um $A = C * \sin\varphi$ und $B = C * \cos\varphi$ sowie A/B zu berechnen. Anschließend wird gefragt, ob IB/T in das Intervall von 0 bis 1/4, in das Intervall von 1/4 bis 1/2 oder in das Intervall von 1/2 bis 1 fällt. Falls IB/T in das Intervall von 1/2 bis 1 fällt und IB = T ist, so sind der Radialwinkel φR und der TangentialwinkeL φT null. Der Lichtstrahl ist genau lotrecht auf die Platte gerichtet. Falls aber IB ≠ T, so wird eine fehlerhafte Abtastung angenommen.

Ist dagegen IB/T < 1/4, so wird gefragt, ob die Flanke im Steuersignal Ux, die den zweiten Zähler anhält, eine fallende oder eine steigende Flanke war. Nach beiden Fallentscheidungen wird anschließend geprüft, ob A/B > 9. Falls A/B > 9, so ist das Vorzeichen des Radialwinkels φR und des Tangentialwinkels φT bekannt.

Falls A/B ≦ 9, dann wird gefragt, ob A/B < 0,11. Nach dieser letzten Abfrage lassen sich die Vorzeichen

des Radialwinkels $\phi$R und des Tangentialwinkels $\phi$T bestimmen. Der genaue Abfragemodus für alle auftretenden Fälle ist dem Flußdiagramm in Figur 10 zu entnehmen.

Die Werte 9 und 0,11 haben sich in Versuchen als günstig erwiesen. Das Verhältnis tg $\varphi$ = A/B = 9 entspricht einer Phasenverschiebung von ungefähr 84°, während dem Verhältnis tg $\varphi$ = A/B = 0,11 eine Phasenverschiebung von etwa 6,3° zugrunde liegt.

Bei diesem im Flußdiagramm gewählten Zahlenbeispiel wird bei einer Phasenverschiebung zwischen 84° und 90° der Radialwinkel $\phi$R zu null angenommen. Liegt die Phasenverschiebung zwischen 0° und 6,3°, so wird für den Tangentialwinkel $\phi$T der Wert 0° angenommen.

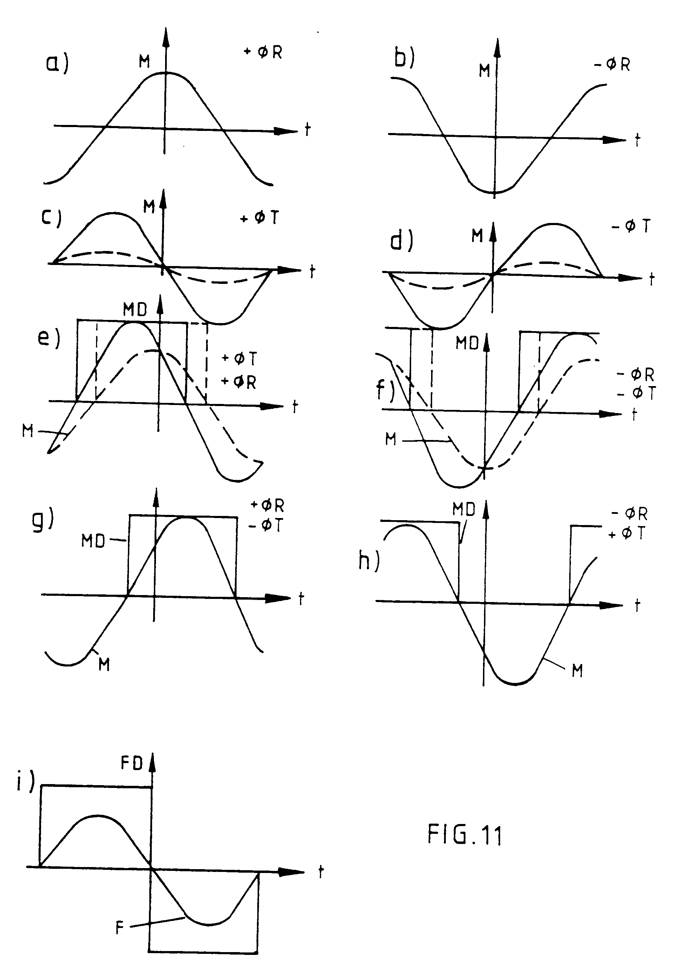

In den Figuren 11a bis 11h sind das demodulierte Datensignal M am Ausgang des Demodulators DM und das digitalisierte Datensignal MD am Ausgang des Impulsformers I1 für verschiedene Radialwinkel $\phi$R und Tangentialwinkel $\phi$T gezeigt. In Figur 11i sind das Fokusfehlersignal FE und das digitalisierte Fokusfehlersignal FD am Ausgang des Impulsformers I2 dargestellt.

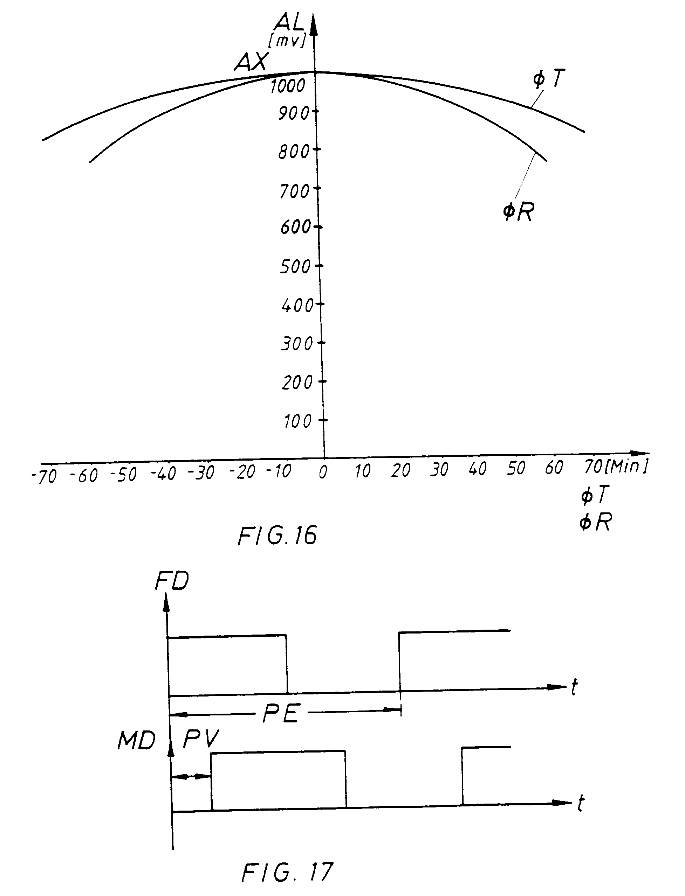

In der Figur 16 ist die Amplitude des amplitudenmodulierten Datensignals in mV in Abhängigkeit vom Radialwinkel $\phi$R und vom Tangentialwinkel $\phi$T dargestellt. In Folge von Unsymmetrien in der Optik, z.B. nichtkreisförmige Lichtflecken auf dem Aufzeichnungsträger oder eine unsymmetrische Verteilung der Lichtstrahlen auf der Datenspur, verursacht ein Radialwinkel eine andere Dämpfung der Amplitude des Datensignals als ein Tangentialwinkel der gleichen Größe. Um diesen Unterschied zu berücksichtigen, wird für den Radialwinkel eine konstante KR und für den Tangentialwinkel eine Konstante KT an Hand der in Figur 16 gezeigten Meßkurven ermittelt. Die Amplitude AL des Datensignals HF berechnet sich zu AL = AX - KR $*$ $\phi$R$^2$ für $\phi$T = 0 und AL = AX - KT $*$ $\phi$T$^2$ für $\phi$R = 0. AX ist die maximale Amplitude des Datensignals HF.

In der Figur 17 sind das digitalisierte Fokusfehlersignal FD und das demodulierte Datensignal MD übereinander gezeichnet, um die Phasenverschiebung PV zwischen den Signalen FD und MD erkennen zu können.

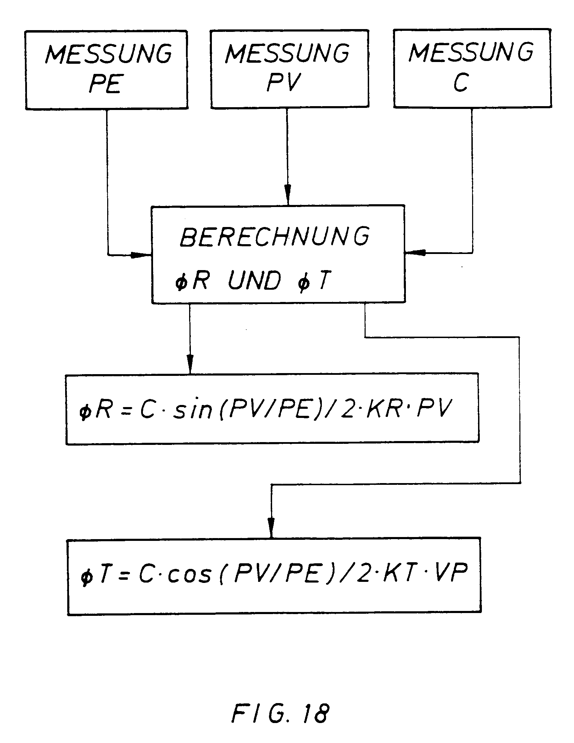

Es wird nun das in Figur 18 abgebildete Flußdiagramm zur Berechnung des Radialwinkels $\phi$R und des Tangentialwinkels $\phi$T erläutert.

Zunächst werden die Phasenverschiebung PV zwischen dem digitalierten Fokusfehlersignal FD und dem demodulierten Datensignal MD, die Periode PE des digitalisierten Fokusfehlersignals FD und die Amplitude C des amplitudenmodulierten Datensignals gemessen. Der Radialwinkel $\phi$R wird nach folgender Formel berechnet:

$$\phi R = C * \sin (PV/PE)/2 * KR * VP.$$

Der Tangentialwinkel $\phi$T wird nach der Formel

$$\phi T = C * \cos (PV/PE)/2 * KT * VP$$

berechnet.

VP ist der vertikale Plattenschlag des Aufzeichnungsträgers.

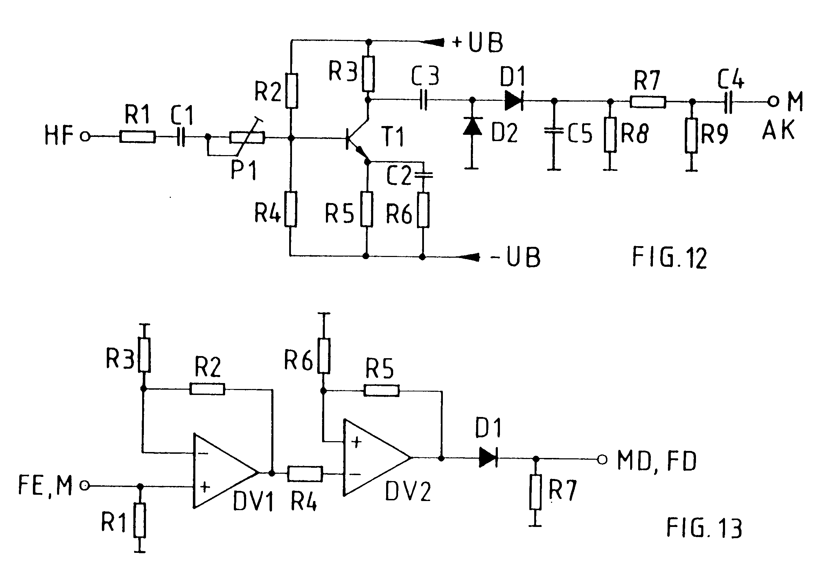

In der Figur 12 ist ein Ausführungsbeispiel eines Amplitudendemodulators DM abgebildet.

Das Datensignal HF gelangt über eine Reihenschaltung aus einem Widerstand R1, einer Kapazität C1 und einem Potentiometer P1 an die Basis eines Transistors T1. Eine Versorgungsspannung +UB liegt über einem Widerstand R2 an der Basis und über einen Widerstand R3 am Kollektor des Transistors T1. Eine Versorgungsspannung -UB liegt über einen Widerstand R4 an der Basis und über einen Widerstand R5, zu dem eine Reihenschaltung aus einer Kapazität C2 und einem Widerstand R6 parallel geschaltet ist, am Emitter des Transistors T1. Der Kollektor des Transistors T1 ist über eine Reihenschaltung aus einer Kapazität C3 und einer Diode D1, einem Widerstand R7 und einer Kapazität C4 mit der Ausgangsklemme AK des Amplitudendemodulators DM verbunden. Der Verbindungspunkt der Kapazität C3 und der Diode D1 liegt über eine Diode D2 auf Bezugspotential. Der Verbindungspunk der Diode D1 und des Widerstandes R7 liegt über eine Parallelschaltung aus einem Widerstand R8 und einer Kapazität C5 auf Bezugspotential. Der Verbindungspunkt des Widerstandes R7 und der Kapazität C4 liegt über einer Widerstand R9 auf Bezugspotential.

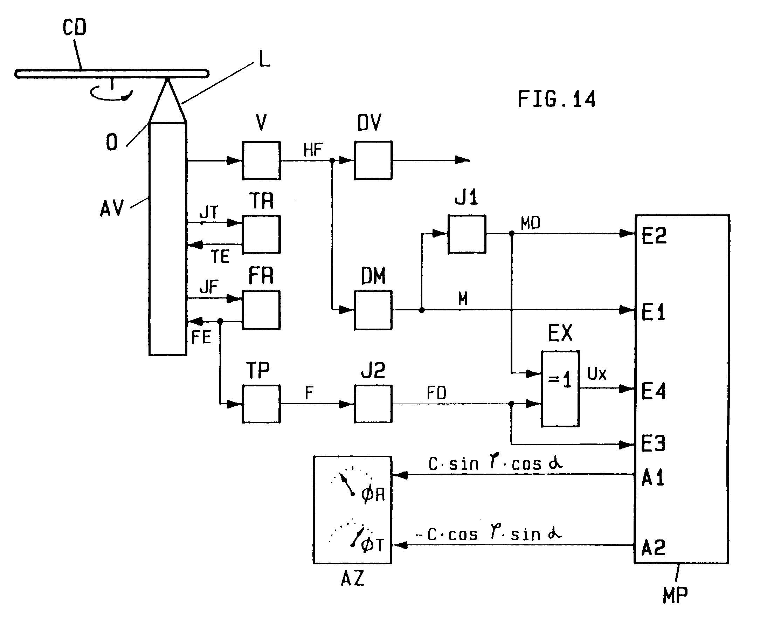

In Figur 13 ist ein Beispiel eines Impulsformers I1 und I2 gezeigt.

Das demodulierte Datensignal M bzw. das Fokusfehlersignal FE wird dem nichtinvertierenden Eingang eines Differenzverstärkers DV1 zugeführt, der über einen Widerstand R1 auf Bezugspotential liegt. Der Ausgang des Differenzverstärkers DV1 ist über einen Widerstand R2 auf seinen invertierenden Eingang rückgekoppelt, der über einen Widerstand R3 auf Bezugspotential liegt. Der Ausgang des Differenzverstärkers DV1 ist über einen Widerstand R4 mit dem invertierenden Eingang eines Differenzverstärkers DV2 verbunden, dessen Ausgang über einen Widerstand R5 mit dem nichtinvertierenden Eingang des Differenzverstärkers DV2 verbunden ist. Der nichtinvertierende Eingang des Differenzverstärkers DV2 liegt über einen Widerstand R6 auf Bezugspotential. Der Ausgang des Differenzverstärkers DV2 liegt über eine Reihenschaltung aus einer Diode D1 und einem Widerstand R7 auf Bezugspotential. Am Verbindungspunkt der Diode D1 und des Widerstandes R7 ist das demodulierte digitalisierte Datensignal MD bzw. das digitalisierte Fokusfehlersignal FD abnehmbar.

Die Erfindung ist für optische und magneto-optische Aufzeichnungs- und Wiedergabegeräte geeignet.

Das erfindungsgemäße Verfahren bewirkt, daß der die Daten abtastende Lichtstrahl lotrecht auf die Platte trifft.

Ein Vorteil der Erfindung ist darin zu sehen, daß die Größe des Radialwinkels $\phi R$ und des Tangentialwinkels $\phi T$ auch angezeigt werden können. Es ist deshalb möglich, mit einer genau justierten optischen Abtastvorrichtung und einem ebenfalls genau justierten Plattenantrieb die Güte von Platten zu messen. Hierzu werden die optische Abtastvorrichtung und der Plattenantrieb so justiert, daß der Lichtstrahl lotrecht auf eine Testplatte ohne Plattenschlag und mit vollkommen ebener Oberfläche strahlt.

Wenn es sich bei der zu testenden Platte um eine ideale Platte handelt, so werden beim Abtasten dieser Platte für den Radialwinkel und den Tangentialwinkel nur die Werte Null angezeigt. Ist die Platte dagegen gewölbt oder wellig, so werden von Null verschiedene Werte für den Radial- und den Tangentialwinkel angezeigt. Die gemessenen Radial- und Tangentialwinkel sind deshalb ein Maß für die Güte einer Platte.

In Figur 14 ist eine Vorrichtung zum Messen und Anzeigen des Radialwinkels $\phi R$ und des Tangentialwinkels $\phi T$ gezeigt. Diese Vorrichtung unterscheidet sich von der in Figur 8 abgebildeten Anordnung dadurch, daß die Signale an den Ausgängen A1 und A2 des Mikroprozessors MP anstatt zwei Reglern einem Anzeigeinstrument AZ zugeführt werden.

Die Erfindung ermöglicht daher auch den Bau eines Meßgerätes, um die Güte von optischen und magnetooptischen Platten festzustellen.

Umgekehrt lassen sich mit einer Meßplatte, deren Plattenschlag bekannt ist, der Tangential- und der Radialwinkel von Aufzeichnungs- und Wiedergabegeräten messen.

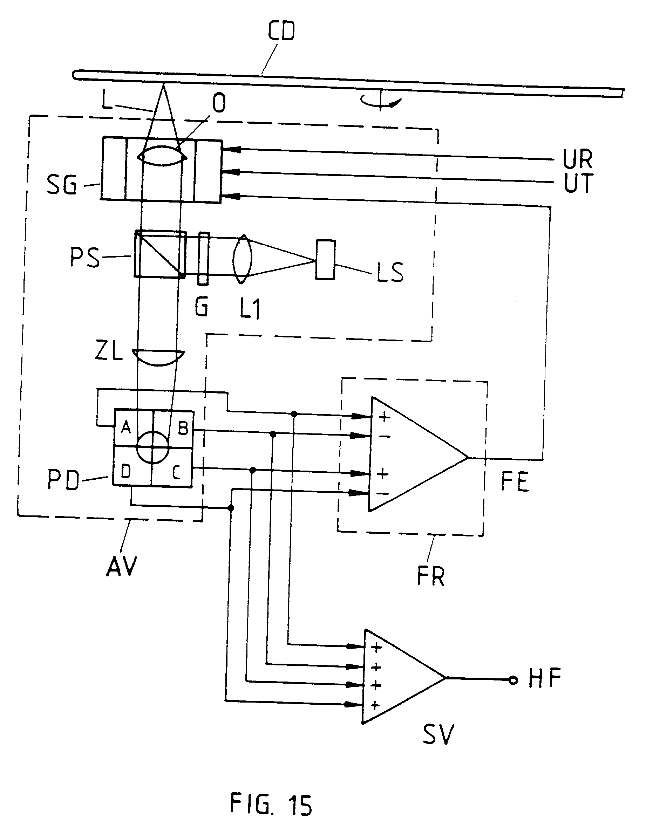

In der Figur 15 ist der Aufbau einer optischen Abtastvorrichtung abgebildet.

Der von einem Laser LS erzeugte Lichtstrahl strahlt durch eine Linse L1 auf einen Prismenstrahlteiler PS, der den Lichtstrahl rechtwinklig zur Objektivlinse 0 ablenkt, die ihn mit Hilfe des Fokusregelkreises auf die Platte CD fokussiert. Von der Platte CD wird der Lichtstrahl zurück zum Prismenstrahlteiler PS reflektiert. Der reflektierte Lichtstrahl strahlt geradlinig durch den Prismenstrahlteiler PS zu einer Zylinderlinse ZL, die ihn auf einen Vierquadrantenphotodetektor PD mit vier Photodioden A, B, C und D richtet. In einem Additionsverstärker SV werden die Ausgangssignale der vier Photodioden A, B, C und D des Vierquadrantenphotodetektors PD addiert. Am Ausgang des Additionsverstärkers SV ist das Datensignal HF abgreifbar. In einem Differenzverstärker, dem Fokusregler FR, wird durch Addition der Ausgangssignale der einen beiden sich diagonal gegenüberliegenden Photodioden A und C und durch Subtraktion der Ausgangssignale der anderen beiden sich diagonal gegenüberliegenden Photodioden B und D das Fokusfehlersignal FE erzeugt. Der Ausgang des Fokusreglers FR ist mit den Stellgliedern SG der Objektivlinse 0 verbunden. Die Regelsignale UR und UT werden ebenfalls den Stellgliedern SG, die z.B. mehrere Spulen sein können, zugeführt. Mittels der von den Spulen erzeugten Magnetfelder läßt sich die Objektivlinse sowohl entlang der optische Achse - der z-Achse - bewegen, um den Lichtstrahl auf die Platte CD zu fokussieren, als auch um die x- und die Y-Achse drehen, um den Tangential- und den Radialwinkel einzustellen.

## Patentansprüche

1. Verfahren zur Erzeugung je eines Regel- oder Meßsignals, um den Tangentialwinkel ($\phi T$) und den Radialwinkel ($\phi R$) eines zum Lesen von Daten auf einen rotierenden Aufzeichnungsträger (CD) gerichteten Lichtstrahls (L) zu messen oder auf einen Sollwert zu regeln, wobei der Lichtstrahl (L) vom Aufzeichnungsträger (CD) auf einen Photodetektor reflektiert wird, dessen Ausgangssignal das Datensignal (HF) darstellt, **dadurch gekennzeichnet**, daß das Datensignal (HF) in einem Amplitudendemodulator (DM) demoduliert wird und daß aus der Amplitude und der Phasenlage des demodulierten Datensignals (M) die Regel- oder die Meßsignale (UR, UT) erzeugt werden.

2. Verfahren nach Anspruch 1, **dadurch gekennzeichnet**, daß aus dem demodulierten Datensignal M = C $*$ sin($\alpha + \varphi$) das Regelsignal UR = C $*$ sin $\varphi$ $*$ cos $\alpha$ für den Radialwinkel ($\phi R$) und das Regelsignal UT = - C $*$ cos $\varphi$ $*$ sin $\alpha$ für den Tangentialwinkel ($\phi T$) erzeugt werden.

3. Verfahren nach Anspruch 1 oder 2, **dadurch gekennzeichnet**, daß die Phasenlage des demodulierten Datensignals (M) mit der Phasenlage eines Fokusfehlersignals (FE) verglichen wird, das als Regelsignal für einen Fokusregelkreis dient, der den Lichtstrahl (L) auf den Aufzeichnungsträger (CD) fokussiert.

4. Verfahren nach Anspruch 3, **dadurch gekennzeichnet**, daß der Radialwinkel ($\phi R$) nach der Formel R = C $*$ sin (PV/PE)/2 $*$ KR $*$ VP und daß der Tangentialwinkel ($\phi T$) nach der Formel $\phi T$ = C $*$ cos (PV/PE)/2 $*$ KT $*$ VP berechnet wird, wobei KR und KT Konstanten sind und VP der vertikale Plattenschlag des Auf-

7

zeichnungsträgers ist.

5. Verfahren nach Anspruch 1, 2, 3 oder 4, **dadurch gekennzeichnet,** daß das Regelsignal UR und das Regelsignal UT einem Anzeigeinstrument (AZ) zugeführt werden, das den Radialwinkel ($\phi$R) und den Tangentialwinkel ($\phi$T) anzeigt.

6. Verfahren nach Anspruch 1, 2, 3 oder 4, **dadurch gekennzeichnet,** daß das Regelsignal UR einem ersten Regler (RR) zugeführt wird, der den Radialwinkel ($\phi$R) des Lichtstrahls (L) regelt und daß das Regelsignal UT einem zweiten Regler (RT) zugeführt wird, der den Tangentialwinkel ($\phi$T) des Lichtstrahls (L) regelt.

7. Anordnung zur Durchführung des Verfahrens nach Anspruch 5, **dadurch gekennzeichnet,** daß der Lichtstrahl (L) einer optischen Abtastvorrichtung (AV) auf den Aufzeichnungsträger (CD) mittels einer Objektivlinse (O) fokussiert wird, daß die optische Abtastvorrichtung (AV) das Datensignal einem Verstärker (V) zuführt, dessen Ausgang mit dem Eingang einer Einheit (DV) zur Datenverarbeitung und mit dem Eingang eines Amplitudendemodulators (DM) verbunden ist, daß der Ausgang des Amplitudendemodulators (DM) mit dem ersten Eingang (E1) eines Mikroprozessors (MP) und mit dem Eingang eines ersten Impulsformers (I1) verbunden ist, daß der Ausgang des ersten Impulsformers (I1) mit dem zweiten Eingang (E2) des Mikroprozessors (MP) verbunden ist, daß die optische Abtastvorrichtung (AV) den Istwert (IF) des Fokusregelkreises an einen Fokusregler (FR) gibt, der das Fokusfehlersignal (FE) erzeugt und an die optische Abtastvorrichtung (AV) und an einen Tiefpaß (TP) abgibt, dessen Ausgang mit dem Eingang eines zweiten Impulsformers (I2) verbunden ist, daß der Ausgang des zweiten Impulsformers (I2) mit dem dritten Eingang (E3) des Mikroprozessors verbunden ist, daß ein erster Ausgang (A1) des Mikroprozessors (MP), der das Regelsignal UR = C $*$ sin $\varphi$ $*$ cos$\alpha$ abgibt und ein zweiter Ausgang (A2) des Mikroprozessors (MP), der das Regelsignal UT = - C $*$ cos $\varphi$ $*$ sin$\alpha$ abgibt, mit einer Anzeigevorrichtung (AZ) verbunden ist.

8. Anordnung zur Durchführung des Verfahrens nach Anspruch 6, **dadurch gekennzeichnet,** daß der Lichtstrahl (L) einer optischen Abtastvorrichtung (AV) auf den Aufzeichnungsträger (CD) mittels einer Objektivlinse (O) fokussiert wird, daß die optische Abtastvorrichtung (AV) das Datensignal einem Verstärker (V) zuführt, dessen Ausgang mit dem Eingang einer Einheit (DV) zur Datenverarbeitung und mit dem Eingang eines Amplitudendemodulators (DM) verbunden ist, daß der Ausgang des Amplitudendemodulators (DM) mit dem ersten Eingang (E1) eines Mikroprozessors (MP) und mit dem Eingang eines ersten Impulsformers (I1) verbunden ist, daß der Ausgang des ersten Impulsformers (I1) mit dem zweiten Eingang (E2) des Mikroprozessors (MP) verbunden ist, daß die optische Abtastvorrichtung (AV) den Istwert (IF) des Fokusregelkreises an einen Fokusregler (FR) gibt, der das Fokusfehlersignal (FE) erzeugt und an die optische Abtastvorrichtung (AV) und an einen Tiefpaß (TP) abgibt, dessen Ausgang mit dem Eingang eines zweiten Impulsformers (I2) verbunden ist, daß der Ausgang des zweiten Impulsformers (I2) mit dem dritten Eingang (E3) des Mikroprozessors (MP) verbunden ist, daß ein erster Ausgang (A1) des Mikroprozessors (MP), der das Regelsignal UR = C $*$ sin $\varphi$ $*$ cos$\alpha$ abgibt, mit dem Eingang eines ersten Reglers (RR) verbunden ist, dessen Ausgang mit der optischen Abtastvorrichtung (AV) verbuncen ist, und daß ein zweiter Ausgang (A2) des Mikroprozessors (MP), der das Regelsignal UT = - C $*$ cos $\varphi$ $*$ sin $\alpha$ abgibt, mit dem Eingang eines zweiten Reglers (RT) verbunden ist, dessen Ausgang mit der optischen Abtastvorrichtung (AV) verbunden ist.

9. Anordnung nach Anspruch 7 oder 8, **dadurch gekennzeichnet,** daß der Ausgang des ersten Impulsformers (I1) und des zweiten Impulsformers (I2) mit dem Eingängen eines EXCLUSIV-ODER-Gatters (EX) verbunden sind, dessen Ausgang mit dem vierten Eingang (E4) des Mikroprozessors (MP) verbunden ist.

**Claims**

1. Method for generating a regulating or measuring signal in order to measure or regulate to a set value both the tangential angle ($\phi$T) and the radial angle ($\phi$R) of a light beam (L) directed onto a rotating recording medium (CD) for reading the data on said medium, whereby the light beam (L) is reflected from the recording medium (CD) onto a photodetector, the output of which represents the data signal (HF), **characterized in that** the data signal (HF) is demodulated in an amplitude demodulator (DM), and that the regulating or measuring signals (UR, UT) are generated from the amplitude and the phase position of the demodulated data signal (M).

2. Method according to claim 1, **characterized in that** the regulating signal UR = C∗sinφ∗cosα for the radial angle (φR) and the regulating signal UT = -C∗cosφ∗sinα for the tangential angle (φT) are generated from the demodulated data signal M = C∗sin(α+φ).

3. Method according to claim 1 or 2, **characterized in that** the phase position of the demodulated data signal (M) is compared with the phase position of a focusing error signal (FE) which serves as regulating signal for a focusing regulation circuit which focuses the light beam (L) onto the recording medium (CD).

4. Method according to claim 3, **characterized in that** the radial angle (φR) is calculated according to the formula φR = C∗sin(PV/PE)/2∗KR∗VP, and that the tangential angle (φT) is calculated according to the formula φT = C∗cos(PV/PE)/2∗KT∗VP, whereby KR and KT are constants and VP is the vertical disk slap or chattering of the recording medium.

5. Method according to claims 1, 2, 3 or 4, **characterized in that** the regulating signal UR and the regulating signal UT are fed to a display device (AZ) which indicates the radial angle (φR) and the tangential angle (φT).

6. Method according to claims 1, 2, 3 or 4, **characterized in that** the regulating signal UR is fed to a first regulator (RR) which regulates the radial angle (φR) of the light beam (L), and that the regulating signal UT is fed to a second regulator (RT) which regulates the tangential angle (φT) of the light beam (L).

7. Arrangement for executing the method according to claim 5, **characterized in that** the light beam (L) of an optical scanning facility (AV) is focused onto the recording medium (CD) by means of an objective lens (O), the optical scanning facility (AV) feeds the data signal to an amplifier (V), the output of which is coupled with the input of a data processing unit (DV) and with the input of an amplitude demodulator (DM), the output of the amplitude demodulator (DM) is coupled with the first input (E1) of a microprocessor (MP) and with the input of a first impulse former (I1) , the output of first impulse former (I1) is coupled with the second input (E2) of the microprocessor (MP), the optical scanning facility (AV) provides a focusing regulator (FR) with the actual (instantaneous) value (IF) of the focusing regulation circuit and said regulator generates the focusing error signal (FE) and transmits said signal (FE) to the optical scanning facility (AV) an a low-pass filter (TP), the output of which is coupled with the input of a second impulse former (I2), the output of the second impulse former (I2) is coupled with the third input (E3) of the microprocessor, and that a first output (A1) of the microprocessor (MP) , which provides the regulating signal UR = C−∗sinφ∗cosα, and a second output (A2) of the microprocessor (MP), which provides the regulating signal UT = -C∗cosφ∗sinα, are coupled with a display device (AZ).

8. Arrangement for executing the method according to claim 6, **characterized in that** the light beam (L) of an optical scanning facility (AV) is focused onto the recording medium (CD) by means of an objective lens (O), the optical scanning facility (AV) feeds the data signal to an amplifier (V), the output of which is coupled with the input of a data processing unit (DV) and with the input of an amplitude demodulator (DM), the output of the amplitude demodulator (DM) is coupled with the first input (E1) of a microprocessor (MP) and with the input of a first impulse former (I1), the output of first impulse former (I1) is coupled with the second input (E2) of the microprocessor (MP), the optical scanning facility (AV) provides a focusing regulator (FR) with the actual (instantaneous) value (IF) of the focusing regulation circuit and said regulator generates the focusing error signal (FE) and transmits said signal (FE) to the optical scanning facility (AV) an a low-pass filter (TP), the output of which is coupled with the input of a second impulse former (I2), the output of the second impulse former (I2) is coupled with the third input (E3) of the microprocessor (MP), a first output (A1) of the microprocessor (MP), which provides the regulating signal UR = C∗sinφ∗cosα, is coupled with the input of a first regulator (RR), the output of which is coupled with the optical scanning facility (AV), and that a second output (A2) of the microprocessor (MP), which provides the regulating signal UT = -C∗cosφ∗sinα, is coupled with the input of a second regulator (RT), the output of which is coupled with the optical scanning facility (AV).

9. Arrangement according to claim 7 or 8, **characterized in that** the outputs of the first impulse former (I1) and the second impulse former (I2) are coupled with the inputs of an exclusive-OR gate (EX), the output of which is coupled with the fourth input (E4) of the microprocessor (MP).

## Revendications

1. Procédé pour générer à la fois un signal de réglage ou de mesure pour mesurer l'angle tangentiel ($\phi$T) et l'angle radial ($\phi$R) d'un rayon lumineux (L) dirigé sur un support d'enregistrement rotatif (CD) pour lire des données ou pour le régler à une valeur nominale, le rayon lumineux (L) étant réfléchi par le support d'enregistrement (CD) sur un détecteur photoélectrique dont le signal de sortie représente le signal de données (HF), **caractérisé en ce** que le signal de données (HF) est démodulé dans un démodulateur d'amplitude (DM) et que les signaux de réglage ou de mesure (UR, UT) sont générés à partir de l'amplitude et de la relation de phase du signal de données démodulé (M).

2. Procédé selon la revendication 1, **caractérisé en ce** que le signal de réglage UR = C * sin$\varphi$ * cos$\alpha$ pour l'angle radial ($\phi$R) et le signal de réglage UT = - C * cos$\varphi$ * sin$\alpha$, pour l'angle tangentiel ($\phi$T) sont générés à partir du signal de donnés démodulé M = C * sin ($\alpha + \varphi$).

3. Procédé selon la revendication 1 ou 2, **caractérisé en ce** que la relation de phase du signal de données démodulé (M) est comparée à la relation de phase d'un signal d'erreur de foyer (FE) qui sert de signal de réglage pour un circuit de réglage de foyer qui focalise le rayon lumineux (L) sur le support d'enregistrement (CD).

4. Procédé selon la revendication 3, **caractérisé en ce** que l'angle radial ($\phi$F) est calculé selon la formule R = C * sin (PV/PE)/2 * KR * VP et que l'angle tangentiel ($\phi$T) selon la formule $\phi$T = C * cos (PV/PE)/2 * KT * VP, KR et KT étant des constantes et VP étant la voilure verticale du support d'enregistrement.

5. Procédé selon la revendication 1, 2, 3 ou 4, **caractérisé en ce** que le signal de réglage UR et le signal de réglage UT sont amenés à un instrument d'affichage (AZ) qui affiche l'angle radial ($\phi$R) et l'angle tangentiel ($\phi$T).

6. Procédé selon la revendication 1, 2, 3 ou 4, **caractérisé en ce** que le signal de réglage UR est amené à un premier régulateur (RR) qui règle l'angle radial ($\phi$R) du rayon lumineux (L) et que le signal de réglage UT est amené à un second régulateur (RT) qui règle l'angle tangentiel ($\phi$T) du rayon lumineux (L).

7. Dispositif pour exécuter le procédé selon la revendication 5, **caractérisé en ce** que le rayon lumineux (L) d'un dispositif d'exploration optique (AV) est focalisé sur le support d'enregistrement (CD) au moyen d'une lentille d'objectif (O), que le dispositif d'exploration optique (AV) amène le signal de données à un amplificateur (V) dont la sortie est reliée à une entrée d'une unité (DV) pour le traitement des données et est reliée à l'entrée d'un démodulateur d'amplitude (DM), que la sortie du démodulateur d'amplitude (DM) est reliée à la première entrée (E1) d'un microprocesseur (MP) et à l'entrée d'un premier formateur d'impulsions (I1), que la sortie du premier formateur d'impulsions (I1) est reliée à la seconde entrée (E2) du microprocesseur (MP), que le dispositif d'exploration optique (AV) donne la valeur réelle (IF) du circuit de réglage de foyer à un régulateur de foyer (FR) qui génère le signal d'erreur de foyer (FE) et donne au dispositif d'exploration optique (AV) et à un passe-bas (TP) dont la sortie est reliée à l'entrée d'un second formateur d'impulsions (I2), que la sortie du second formateur d'impulsions (I2) est reliée à la troisième entrée (E3) du microprocesseur, qu'une première sortie (A1) du microprocesseur (MP), qui donne le signal de réglage UR = C * sin$\varphi$ * cos$\alpha$ et qu'une seconde sortie (A2) du microprocesseur (MP), qui donne le signal de réglage UT = - C * cos$\varphi$ * sin$\alpha$, est reliée à un dispositif d'affichage (AZ).

8. Dispositif pour exécuter le procédé selon la revendication 6, **caractérisé en ce** que le rayon lumineux (L) d'un dispositif d'exploration optique (AV) est focalisé sur le support d'enregistrement (CD) au moyen d'une lentille d'objectif (O), que le dispositif d'exploration optique (AV) amène le signal de données à un amplificateur (V) dont la sortie est reliée à une entrée d'une unité (DV) pour le traitement des données et est reliée à l'entrée d'un démodulateur d'amplitude (DM), que la sortie du démodulateur d'amplitude (DM) est reliée à la première entrée (E1) d'un microprocesseur (MP) et à l'entrée d'un premier formateur d'impulsions (I1), que la sortie du premier formateur d'impulsions (I1) est reliée à la seconde entrée (E2) du microprocesseur (MP), que le dispositif d'exploration optique (AV) donne la valeur réelle (IF) du circuit de réglage de foyer à un régulateur de foyer (FR) qui génère le signal d'erreur de foyer (FE) et donne au dispositif d'exploration optique (AV) et à un passe-bas (TP) dont la sortie est reliée à l'entrée d'un second formateur d'impulsions (I2), que la sortie du second formateur d'impulsions (I2) est reliée à la troisième entrée (E3) du microprocesseur (MP), qu'une première sortie (A1) du microprocesseur (MP), qui donne le signal de réglage UR = C * sin$\varphi$ * cos$\alpha$, est reliée à l'entrée d'un premier régulateur (RR), dont la sortie est reliée au dispositif d'exploration optique (AV), et qu'une seconde sortie (A2) du microprocesseur (MP), qui donne le signal de réglage UT = - C * cosφ * sinα, est reliée à l'entrée d'un second régulateur (RT) dont la sortie est reliée au dispositif d'exploration optique (AV).

9.  Dispositif selon la revendication 7 ou 8, **caractérisé en ce** ce que la sortie du premier formateur d'impulsions (I1) et du second formateur d'impulsions (I2) sont reliées aux entrées d'un élément OU exclusif (EX) dont la sortie est reliée à la quatrième entrée (E4) du microprocesseur (MP).

FIG. 1

FIG. 2

FIG.3

HF

F

$\phi T$

FIG. 5

HF

F

$\phi R$

FIG. 4

15

FIG.6

$U_R = C \cdot \sin \gamma \cdot \cos d$

$U_T = C \cdot \cos \gamma \cdot \sin d$

EP 0 548 120 B1

FIG. 7

FIG. 8

EP 0 548 120 B1

FIG. 9

BERECHNG. T

↓

COUNTER START

↓

COUNTER STOP

↓

BERECHNG. $\frac{J}{B}$

↓

MESSUNG C

↓

BERECHNG. A

↓

BERECHNG. B

↓

BERECHNG. $\frac{A}{B}$

↓

1

C = AMPLITUDE VON M

A = C· SIN $\gamma$ (BETRAG VON $\phi$R)

B = C· COS $\gamma$ (BETRAG VON $\phi$T)

FIG. 10 a

EP 0 548 120 B1

FIG. 10 b

2

$$\frac{JB}{T} < \frac{1}{2}$$

JA

STOP FLANKE "+"

JA

$$\frac{A}{B} > 9$$

JA

3

$$\frac{A}{B} < 0,11$$

JA

4

$$\phi T = "-"$$

$$\phi R = O$$

$$\phi T = "-"$$
$$\phi R = "+"$$

JB = T

JA

$$\phi T = O$$
$$\phi R = O$$

FEHL-ABTASTG.

$$\frac{A}{B} > 9$$

JA

$$\frac{A}{B} < 0,11$$

JA

$$\phi T = "+"$$
$$\phi R = "-"$$

5

6

FIG. 10 c

FIG.11

**FIG.12**

**FIG.13**

24

FIG.14

FIG. 15

FIG. 16

FIG. 17

| MESSUNG<br>PE | MESSUNG<br>PV | MESSUNG<br>C |
|---|---|---|

BERECHNUNG<br>$\phi R$ UND $\phi T$

$\phi R = C \cdot sin\,(PV/PE)/\,2 \cdot KR \cdot PV$

$\phi T = C \cdot cos\,(PV/PE)/\,2 \cdot KT \cdot VP$

FIG. 18